# DEMANDE DE BREVET EUROPEEN

(11) **EP 1 348 917 A1**
(43) Date de publication de la demande: **01.10.2003**
(21) Numéro de dépôt: 02447049.4
(22) Date de dépôt: 28.03.2002
(51) Int. Cl.: F24J 3/08

(54) **Procédé d'évacuation de la chaleur**

(71) Demandeur: Métrologie et Gestion d'Environnement, Sprl MGE sprl, 1301 Bierces (BE)
(72) Inventeur: Noel, Marc, 1300 Wavre (BE)
(74) Mandataire: Van Malderen, Joelle

(57) **Abrégé**

La présente invention se rapporte à un dispositif et un procédé d'échange de chaleur fonctionnant en circuit ouvert ou en circuit fermé comprenant au moins une source chaude, une source froide ainsi qu'au moins un échangeur de chaleur (2,3) par lequel au moins un fluide caloporteur (7) transfère des calories ou des frigories, caractérisé en ce que soit la source chaude, soit la source froide comprend un échangeur en contact avec un réseau de distribution d'eau potable ou d'eaux usées.

## Description

### Objet de l'invention

La présente invention se rapporte à un procédé et à un dispositif d'évacuation de calories ou de frigories dans le cadre d'applications industrielles ou ménagères.

### Etat de la technique

L'évacuation des surplus de chaleur a fait l'objet de nombreuses études dans le passé. Ces études ont notamment donné lieu à des solutions du type groupe frigorifique et/ou pompe à chaleur, qui permettent d'évacuer la chaleur par l'intermédiaire d'un fluide à bas point d'ébullition mais à faible capacité calorifique. Les points chauds de ce type d'installation sont généralement refroidis par des ventilateurs relativement bruyants, brassant de grandes quantités d'air.

Beaucoup de travaux ont amélioré l'efficacité énergétique de ces installations en optimalisant notamment la nature des fluides thermiques et le rendement des compresseurs. Les installations modernes sont pilotées par des logiciels performants qui intègrent les données d'une grande quantité de capteurs pour garantir une utilisation optimale de ces installations. D'autres approches par contre ont tenté de réduire les besoins énergétiques de ces installations en améliorant l'évacuation des calories.

Une avancée significative a été réalisée par l'utilisation de tours de refroidissement à évaporation d'eau. L'eau étant un liquide à grande capacité calorifique, on se sert essentiellement de la chaleur d'évaporation de l'eau pour refroidir le liquide caloporteur. L'efficacité de telles tours de refroidissement est largement conditionnée par la teneur en humidité de l'air, elle-même fonction de la température, qui influence largement l'enthalpie disponible pour le refroidissement du point chaud. Ces tours de refroidissement fonctionnent donc très bien lorsque l'air est très sec et qu'elles ont un accès à l'air libre. Par contre, dans les endroits confinés, les tours de refroidissement donnent lieu à des taux d'humidités élevés entraînant une prolifération bactérienne non souhaitée. De manière générale, les tours à eau permettent une économie d'énergie de l'ordre de dix pour cent. La présente invention propose un procédé d'échange calorifique original pour remédier à une série d'inconvénients de l'état de la technique et pour aboutir globalement à une économie d'énergie considérable.

### Buts de l'invention

La présente invention vise à fournir un procédé d'échange de calories ou de frigories en circuit ouvert ou fermé permettant de réduire les consommations énergétiques pour les besoins de refroidissement ou de chauffage dans les bâtiments domestiques ou dans l'industrie.

### Principaux éléments caractéristiques

L'invention propose un dispositif d'échange de chaleur fonctionnant en circuit ouvert ou en circuit fermé et comprenant au moins une source chaude, une source froide ainsi qu'au moins un échangeur de chaleur par lequel au moins un fluide caloporteur transfère des calories ou des frigories, caractérisé en ce que soit la source chaude, soit la source froide comprend un échangeur en contact avec un réseau de distribution d'eau potable ou avec un réseau d'égouttage des eaux usées (1).

Un autre objectif de la présente invention est de proposer un procédé d'échange de chaleur entre au moins une source chaude et une source froide à l'aide d'au moins un échangeur de chaleur (3), caractérisé en ce que ladite source froide est en contact avec le réseau de distribution d'eau potable ou le réseau d'égouttage d'eaux usées (1).

Un élément caractéristique de la présente invention est que ledit échange de chaleur s'effectue par l'intermédiaire d'au moins un circuit fermé placé entre ladite source chaude et ladite source froide.

Un autre élément caractéristique de la présente invention est que ledit échange de chaleur s'effectue par l'intermédiaire d'un double circuit fermé.

Enfin, l'invention propose l'utilisation du dispositif selon la présente invention pour des applications industrielles ou ménagères telles que le refroidissement ou le conditionnement d'air, ou encore le chauffage de bâtiments ainsi que l'utilisation du réseau d'eau potable et/ou d'eaux usées comme échangeur de chaleur pour le refroidissement, le conditionnement d'air ou le chauffage. Par ailleurs, elle propose l'utilisation de l'eau potable et/ou d'eaux usées comme fluide caloriporteur.

### Brève description des figures

La figure 1 représente le principe général d'un procédé d'échange de chaleur en circuit fermé avec une canalisation d'eaux usées ou une canalisation d'eau potable appartenant au réseau de distribution.

La figure 2 représente le principe général d'un procédé d'échange de chaleur en circuit ouvert avec une canalisation d'eau potable appartenant au réseau de distribution.

La figure 3 montre un exemple d'application d'un procédé d'échange de chaleur en double circuit fermé pour un bâtiment équipé de conditionnement d'air.

La figure 4 montre un autre exemple d'application d'un procédé d'échange de chaleur encircuit fermé simple.

### Description détaillée de plusieurs formes d'exécution de la présente invention

La présente invention se fixe pour objectif de proposer un dispositif et un procédé qui permettent de réduire les consommations énergétiques dans les bâtiments domestiques et industriels. Cette invention pourrait donc contribuer à réaliser les objectifs que de nombreux pays industriels se sont fixés en matière de réduction de consommation de CO₂ selon le protocole de Kyoto. Elle est basée sur l'utilisation des réseaux d'eau potable et/ou d'eaux usées comme source froide ou chaude pour les systèmes de chauffage ou de refroidissement des bâtiments ou des procédés industriels. L'eau d'un réseau peut être amenée à donner ou à recevoir de la chaleur. Ce réseau représente parallèlement un échangeur de chaleur en tant que tel qui permet d'évacuer ou de capter des calories dans la terre. Les réseaux d'eau potable et/ou d'eaux usées peuvent colporter et/ou diffuser de cette façon des calories et/ou des frigories. L'agencement judicieux en série de plusieurs besoins en calories/frigories peut aussi permettre des transferts de calories dites de bas niveau entre des endroits plus ou moins éloignés à des coûts très faibles.

Selon l'invention, il devient donc possible d'utiliser le réseau de distribution d'eau potable ou d'eaux usées existant pour servir de point de captage ou de relargage de calories ou de frigories. Cette possibilité peut éventuellement se greffer sur des installations existantes. Elle permet en outre l'installation de pompes à chaleur sur des réseaux existants sans avoir recours à des excavations importantes.

L'efficacité de l'échange de chaleur avec le réseau est garantie par deux facteurs concomitants : d'une part, la différence entre l'enthalpie de l'eau présente dans les réseaux et l'enthalpie du fluide caloporteur, et d'autre part, la capacité dudit réseau à agir en tant qu'échangeur avec le milieu dans lequel il est installé.

Un des avantages de la présente invention est notamment la réduction du bruit lié à l'utilisation de ventilateurs sur les échangeurs d'évacuation de chaleur des système d'air conditionné.

Un avantage supplémentaire de la présente invention est lié au fait qu'une grande partie de l'eau de distribution est finalement utilisée comme source chaude et que les calories que cette eau porte ne devront donc plus lui être fournies lors de son chauffage ultérieur.

Par ailleurs, dans le cas des eaux usées, une augmentation de température permet l'accélération des processus biologiques de dégradation. Si, par exemple, une dénitrification s'opère à la station d'épuration, celle-ci sera facilitée par une élévation modérée de la température.

La présente invention permet également de garantir une efficacité constante de l'échangeur de chaleur, qui sera supérieure à celle d'un échangeur à air ou d'une tour à eau, tout en éliminant le bruit de fonctionnement et les problèmes éventuels de prolifération bactérienne.

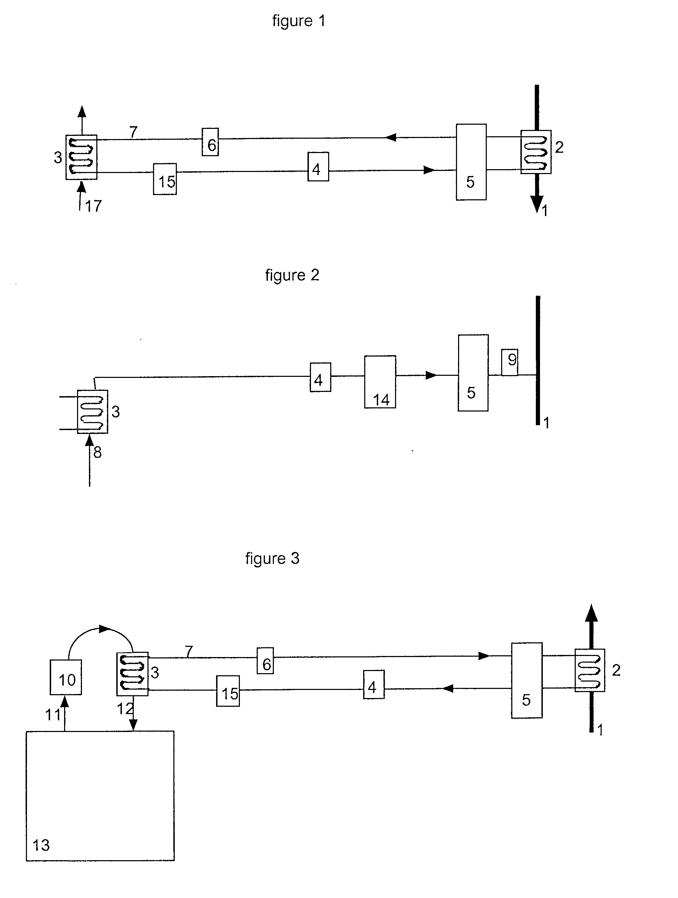

Les formes d'exécution préférées de la présente invention et leurs applications sont représentées dans les figures 1 à 4.

Le premier mode d'exécution préféré de la présente invention est représenté schématiquement dans la figure 1 où un échange d'un fluide calorifère en simple circuit fermé 7 a lieu à travers une boucle fermée comprenant deux échangeurs, l'un au contact d'un fluide portant des calories à évacuer et/ou capter 17, l'autre étant en contact avec une canalisation d'eau propre ou usée. Le fluide calorifère 7 maintenu en mouvement par une pompe à pressostat 4 part ici de l'échangeur de chaleur sur activité 3 et passe par une soupape de sécurité 6 et un système de mesure de chaleur échangée 5 pour être refroidi par l'échangeu spécifique 2. Ce circuit est également muni d'un vase d'expansion 15.

Le second mode d'exécution préféré représenté dans la figure 2 est un procédé d'échange de chaleur entre un échangeur de chaleur sur activité 3 et un fluide calorifère 8 en circuit ouvert. Ledit fluide calorifère étant par exemple prélevé dans la nappe phréatique pour être utilisé à des fins de refroidissement, sans être en contact direct avec le circuit de l'échangeur, et ensuite réacheminé vers le réseau d'eau potable ou d'eaux usées 1 par l'intermédiaire d'une pompe à pressostat 4 à travers un système de traitement 14 si nécessaire, au besoin un système de mesure de la chaleur échangée 5 et un système de sécurité 9 permettant de renvoyer l'eau à l'égout en cas de contamination éventuelle.

Le troisième mode d'exécution préféré de la présente invention est représenté dans la figure 3 où un échange de chaleur s'effectue en double circuit fermé. L'un des deux circuits fermés part d'un bâtiment équipé d'un conditionnement d'air 13 dans lequel un fluide frigorifique chaud rencontre un premier élément d'échange de chaleur 10 où il subit une première perte calorifique et ensuite un échangeur de chaleur sur activité 3 où il se refroidit une seconde fois pour ensuite revenir comme fluide frigorifique froid 12 à son point de départ 13.

Le deuxième circuit d'échange de chaleur dans lequel circule un fluide calorifique 7 comprend dans son mode de fonctionnement dit « été » une source chaude et une source froide constituées respectivement par les échangeurs sur activité 3 et un échangeur de chaleur spécifique 2 branché sur le réseau de distribution 1. Le fluide calorifère 7 part ici de l'échangeu de chaleur sur activité 3 et peut passer par une soupape de sécurité 6 et un système de mesure de chaleur échangée 5 pour être refroidi par l'échangeur spécifique 2 en contact avec le réseau de distribution 1 et pour revenir au point de départ par l'intermédiaire d'une pompe à pressostat 4 et éventuellement dans un vase d'expansion 15. Dans son mode de fonctionnement « hiver », le résultat est inversé et dans ce cas de figure, la source froide est en 3 et la source chaude en 2.

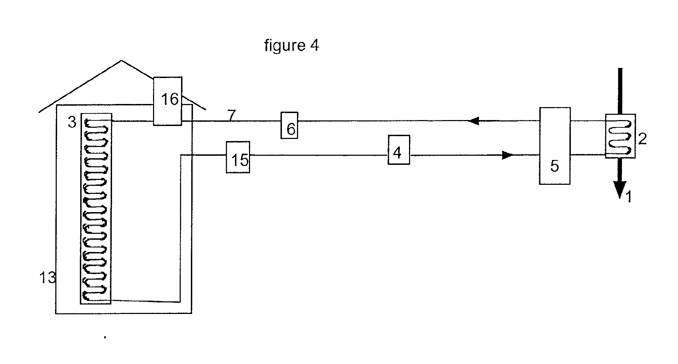

Un quatrième mode d'exécution préféré de la présente invention est représenté dans la figure 4 où l'échange de chaleur se fait à travers un seul circuit fermé partiellement incorporé dans un bâtiment équipé d'un conditionnement d'air 13. Ce circuit d'échange de chaleur comprend une source chaude à l'intérieur du bâtiment et une source froide, toutes deux constituées respectivement des échangeurs sur activité 3 et de l'échangeur de chaleur spécifique 2 présent sur le réseau de distribution 1. Le fluide calorifère 7 part ici de l'échangeu de chaleur sur activité 3 présent dans le bâtiment et passe d'abord par un système de production d'eau chaude/froide 16, par une soupape de sécurité 6 et un système de mesure de chaleur échangée 5 pour être refroidi par l'échangeu spécifique 2 en contact avec le réseau de distribution 1 et pour revenir au point de départ 13 par l'intermédiaire d'une pompe à pressostat 4 et d'un vase d'expansion 15.

Un exemple schématique de calcul illustre les économies réalisables par le procédé de la présente invention. Il est bien connu de l'homme de métier que plus il fait chaud, plus le système de conditionnement d'air d'un bâtiment va fonctionner. L'homme de métier sait également que la différence de température entre les points chaud et froid d'une pompe à chaleur conditionne l'efficacité énergétique de ladite pompe. Plus la différence de température sera élevée, plus elle va consommer de l'électricité pour une même quantité de chaleur transférée d'un point à l'autre.

Par exemple, un groupe frigorifique prévu pour travailler avec de l'air de refroidissement nominalement à 35°C avec une production d'eau froide à 12°C verra sa consommation électrique augmenter de ± 10% si la température de l'air de refroidissement est de 40°C au lieu de 35°C. Inversement, si la température de l'air de refroidissement est de 25°C, on peut compter sur une économie d'énergie de l'ordre de 15 %.

Le tableau suivant reprend de manière générale les consommations énergétiques en fonction de la température du point chaud par rapport à la situation classique d'un échangeur qui est prévu pour travailler à 35°C. Les flux d'énergie véhiculés sont évidemment fonction de la taille des installations et donc des besoins énergétiques.

| Température du point chaud | Rendement relatif |
|---|---|
| 40 | 90% |
| 35 | 100% |
| 25 | 80-85% |
| 15 | 65-75% |

Les économies précises dépendent évidemment de chaque système ou de chaque configuration, du type de régulation, du type de compresseur, de la température du point froid, etc. Cependant, les ordres de grandeur énoncés ici sont valables.

Cela veut dire que, pour une même quantité de chaleur à évacuer de l'intérieur du bâtiment vers l'extérieur de ce dernier, il faut entre 30 et 35% d'énergie en moins si la température du point chaud est de 15 plutôt que 35°C. De la même façon, pour une quantité de chaleur à prendre du milieu extérieur pour la placer à l'intérieur du bâtiment, il faut entre 30 et 35% d'énergie en moins si la température du point chaud est de 15°C plutôt que 35°C.

De plus, la diminution de température du point chaud de la pompe à chaleur selon la présente invention confère à cette dernière un meilleur rendement. Dans certains cas, il sera même possible d'éliminer la pompe à chaleur, ou du moins de l'utiliser exclusivement comme capacité de secours ou d'appoint. En effet, pour autant que l'eau de distribution soit livrable à la source chaude à 10-15 °C en quantité suffisante, l'utilisation de la pompe à chaleur pourrait devenir inutile et une économie d'énergie supplémentaire serait réalisée.

L'homme de métier percevra le double avantage potentiel du système dès lors que la température moyenne des eaux de réseaux est parfaitement intermédiaire entre les maxima et les minima de température extérieure de la plupart des régions peuplées du globe.

### Désignation des éléments sur les figures

1 canalisation d'eau propre ou usée
2 échangeur de chaleur spécifique sur 1
3 échangeur de chaleur sur activité
4 pompe avec ou sans pressostat
5 système de mesure de la chaleur échangée
6 soupape de sécurité
7 fluide calorifère en circuit fermé
8 fluide calorifère en circuit ouvert
9 système de sécurité
10 échangeur fluide frigo-air, tour de refroidissement, etc
11 fluide frigorifique "chaud"
12 fluide frigorifique "froid"
13 bâtiment équipé en système de conditionnement ou refroidissement
14 système de traitement
15 vase d'expansion
16 système de production d'eau chaude/froide
17 fluide portant des calories à évacuer et/ou capter.

## Revendications

1. Dispositif d'échange de chaleur fonctionnant en circuit ouvert ou en circuit fermé comprenant au moins une source chaude, une source froide ainsi qu'au moins un échangeur de chaleur par lequel au moins un fluide caloporteur transfère des calories ou des frigories, **caractérisé en ce que** soit la source chaude, soit la source froide comprend un échangeur en contact avec un réseau de distribution d'eau potable (1).

2. Dispositif d'échange de chaleur fonctionnant en circuit ouvert ou en circuit fermé comprenant au moins une source chaude, une source froide ainsi qu'au moins un échangeur de chaleur par lequel au moins un fluide caloporteur transfère des calories ou des frigories, **caractérisé en ce que** soit la source chaude, soit la source froide comprend un échangeur en contact avec un réseau d'égouttage des eaux usées (1).

3. Procédé d'échange de chaleur entre au moins une source chaude et une source froide à l'aide d'au moins un échangeur de chaleur (3), **caractérisé en ce que** ladite source froide est en contact avec le réseau de distribution d'eau potable(1) ou le réseau d'égouttage d'eaux usées.

4. Procédé selon la revendication 3,
**caractérisé en ce que** ledit échange de chaleur s'effectue par l'intermédiaire d'au moins un circuit fermé placé entre ladite source chaude et ladite source froide.

5. Procédé selon la revendication 3 ou 4, **caractérisé en ce que** ledit échange de chaleur s'effectue par l'intermédiaire d'un double circuit fermé.

6. Utilisation du dispositif selon la revendication 1 ou 2 pour des applications industrielles ou ménagères telles que le refroidissement ou le conditionnement d'air ou encore le chauffage de bâtiments.

7. Utilisation du réseau d'eau potable et/ou d'eaux usées comme échangeur de chaleur pour le refroidissement, le conditionnement d'air ou le chauffage.

8. Utilisation de l'eau potable et/ou de l'eau usée comme fluide caloriporteur.
